Europäisches Patentamt

European Patent Office

Office européen des brevets

(11) Publication number: **0 126 496**
A2

# EUROPEAN PATENT APPLICATION

(21) Application number: **84200343.6**

(51) Int. Cl.³: **H 04 M 1/66, H 04 M 1/36**

(22) Date of filing: **12.03.84**

(30) Priority: **21.03.83 IT 2017383**

(71) Applicant: **ITALTEL SOCIETA' ITALIANA TELECOMUNICAZIONI spa, P.le Zavattari, 12, I-20149 Milano (IT)**

(43) Date of publication of application: **28.11.84 Bulletin 84/48**

(72) Inventor: **Besi, Mario, Piazzale Zavattari 3, Milano (IT)**
Inventor: **Panfili, Gabriele, Via S. Martino 1, Jerago (VA) (IT)**

(84) Designated Contracting States: **AT BE CH DE FR GB LI LU NL SE**

(74) Representative: **Coggi, Giorgio, ITALTEL Società Italiana Telecomunicazioni s.p.a. (Servizio Brevetti) Via A. di Tocqueville 13, I-20154 Milano (IT)**

(54) Electronic padlock for a subscriber telephone line.

(57) The description relates to an electronic padlock which provides the presence of a sensor (SS) adapted to render available a signal (S) whose level expresses the condition of the telephone line. When the subscriber engages the line the sensor (SS) determines the insertion, in parallel with the telephone terminal (TL), of an inhibiting electric branch (T1). This latter is adapted to prevent the switching exchange (CT) from detecting the digits dialled by the subscriber, thus causing the shifting of a predetermined current.

Such digits are however detected, via the said sensor (SS), by a logic unit (UL) that compares the same with a combination stored therein and turns the inhibiting electric branch (T1) off in case of positive result.

- 1 -

0126496

Electronic padlock for a subscriber telephone line.

The present invention relates to a circuital arrangement arranged to be associated with a subscriber telephone line in order to prevent non-authorized people from being able to establish a connection via the terminal connected to the telephone line. More particularly, the circuital arrangement is adapted to inhibit the use of the telephone terminal by non-authorized people, thus preventing the switching exchange from detecting the digits of the decadic dialling.

Prior art provides devices adapted to inhibit the use of telephone terminal to non-authorized people, and that act on the terminal itself. In case the terminal consists of a telephone-set, a mechanical padlock blocking the dialling disk is usually utilized as inhibiting device. If instead the terminal is formed by a keyboard terminal, the inhibiting device usually consists of a switch that may be activated by way of a key that does not allow the performance of predetermined functions. In view of the aforesaid, it results that prior art inhibiting devices require the care of a key and are also surmountable as third persons may disconnect the terminal from the telephone line and replace it with a si milar terminal not equipped with inhibiting device. When the terminal is formed by a telephone set connected to the line via an installation of the plug type, the aforesaid replacement is particularly simple and within everyone's reach.

Purpose of the present invention is that to provide an inhibiting device, indicated throughout the description with the term "electronic padlock", that may act on the telephone line and may be disconnected by dialling a combination through the same dialling device of the terminal. Another purpose is that of using the same circuital arrangement for conferring to a subscriber telephone set connected to a public switching exchange performances usually offered by private telephone exchanges, such as the block of the trunk dialling.

The circuital arrangement according to the invention may be either implemented in a bipolar or in a quadripolar form and is adapted to be connected to the wires (a and b) of the telephone line in any points closen by the subscriber (both in the exchange and near the terminal). According to a preferred embodiment the circuital object of the invention is installed near the subscriber and in particular inside the terminal of the telephone line (boss or tap).

In the circuits of the electronic padlock, the subscriber has the possibility of storing a predetermined combination.

When the subscriber engages the telephone line, the padlock detects the engagement and inserts between the wires of the line an inhibiting electric branch being designed to prevent the switching exchange from detecting the dialling digits.

As long as such a branch results to be connected to the line there is no possibility of using the telephone terminal for calls, since the switching exchange, detecting no dialling digits, does not establish the connection with the required subscriber. The dialled digits are however detected by the padlock and compared with the combination stored therein. In case of positive result the aforesaid inhibiting electric branch is turned off thus allowing the normal utilization of the terminal. Through the activation of a switch, who is responsible for the telephone terminal has also the possibility of arranging the telephone padlock for the insertion of said inhibiting electric branch only when the digits normally provided to have access to the trunk dialling network is dialled as first digit.

Thus, by way of a simple and economical circuital arrangement it is possible to confer to the subscriber set performances usually attainable in private telephone networks.

Object of the present invention is a circuital arrangement providing the presence in combination of the following characteristic elements:

- a sensor adapted to render available a signal whose level indicates the condition (open or closed line) of the telephone line which the circuital arrangement is connected to;

- a logic unit adapted to store a predetermined digit combination, further adapted to re-establish the digits dialled by the subscriber on the ground of the level of the signal supplied by the said sensor and also adapted to activate its own output when it detects the coincidence between the combination of digits stored therein and the digits dialled by the subscriber;

- a threshold circuit connected in parallel with the telephone terminal;

- an inhibiting electric branch adapted to be connected in parallel with the telephone terminal upon control of the said logic unit and of a said threshold circuit, adapted to determine the shifting of a current which is of a bit smaller entity than that used for the normal engagement of the telephone line;

- a supply unit arranged to extract energy from the telephone line and also arranged to render available a direct supply voltage of the said logic unit.

Further characteristics of the solution will appear from the following description of a non-limiting embodiment and with reference to the attached drawings, in which:

- Figure 1 illustrates a basic diagram of the circuital arrangement according to the invention connected to a telephone installation;

- Figure 2 illustrates a first embodiment of sensor SS and the electronic switch T1 of figure 1 realized according to the invention;

- Figure 3 shows a first embodiment of the logic unit UL of figure 1 realized according to the invention;

- Figure 4 shows an embodiment of the supply unit UA of figure 1 realized according to the invention;

- Figure 5 shows a second embodiment of sensor SS and of switch T1 of figure 1 realized according to the invention;

- Figure 6 shows a second embodiment of the threshold circuit (Z1, R1), of figure 1;

- Figure 7 shows a second embodiment of the logic unit UL of figure 1 realized according to the invention.

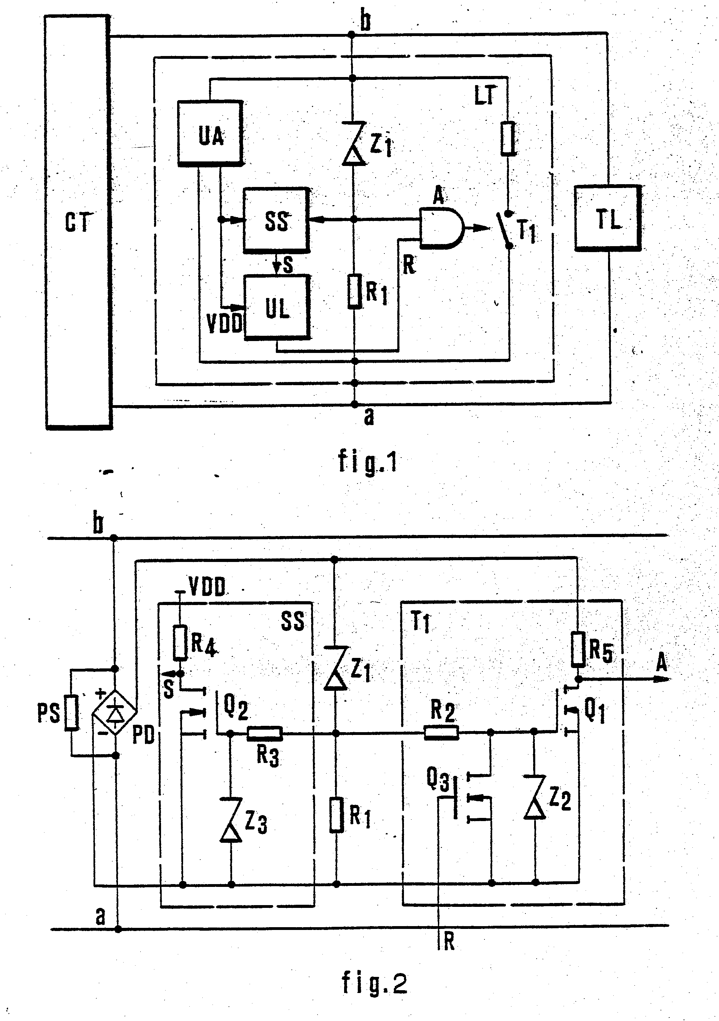

In figure 1 CT is used to indicate a switching telephone exchange which results to be connected to a terminal, formed for istance by a telephone
set TL via a line whose wires have been indicated with <u>a</u> and <u>b</u>.
According to the embodiment illustrated herein the telephone padlock LT
is in bipolar form and may be connected in parallel with the telephone
set in any point of the line both near the subscriber and the switching
exchange CT.

Unit LT provides the presence of a threshold circuit connected in parallel with the telephone terminal TL, that comprises a Zener diode Z1 and
a resistance R1 both connected in series with one another.

Between unit Z1 and resistance R1 there is connected a sensor SS adapted
to render available a signal S whose level indicates the condition of
the telephone line; signal S is applied to the input of a logic unit UL
which is adapted to generate a command R that, together with the said
threshold circuit, controls an inhibiting electric branch.

The activation of T1 in presence of the activation of the threshold circuit and of signal S has been sketched in said figure 1 by means of a
logic product unit A. The inhibiting electric branch mainly consists of
an electronic switch and, when this switch results to be closed and the
telephone line results to be open (side of the telephone set), such an
inhibiting electric branch results to be crossed by a current of predetermined entity. However this current presents a bit smaller entity than
the current that usually circulates on the telephone line in response to
an engagement operation.

The inhibiting electric branch results to be connected in parallel with
a supply unit UA which is adapted to extract energy from the telephone
line and to render available the direct supply voltage VDD of the logic
unit UL.

When the telephone set TL is in the rest condition (line open), unit LT
results to be also resting and presents a high impedance in comparison
with wires <u>a</u> and <u>b</u>, since the electronic switch results to be open and
resistance R1 presents high value.

When the subscriber engages the telephone line (line closed), sensor SS detects this event and activates signal S thus determining the closing of switch T1 via the logic unit UL. Switch T1 represents an inhibiting electric branch since it is designed to prevent the switching exchange from detecting the digits which are going to be dialled by the subscriber following to the engagement. In order to better understand the function of this branch it is to be noted that when the subscriber effects a dialling, he determines a sequence of variations of current flowing on the line which passes from the highest value, in the instants when the line is short-circuited, to the null value when the line results to be open. The switching exchange is arranged to recognize the digits dialled by the subscriber, if during the openings, it detects nearly the absence of current flowing on the loop .

When the electronic switch T1 results to be closed and the subscriber causes the opening of the telephone line effecting this dialling operation, the inhibiting electric branch determines the shifting of this current of predetermined entity, consequently, as long as this branch results to be inserted, the switching exchange CT does not detect absence of current circulation and consequently the digits dialled by the subscriber.

The condition changes of the telephone line are however detect by the sensor and transferred to the logic unit UL which is adapted to effect the comparison between the received dialling and the combination stored therein. If the comparison has a positive result, unit UL generates a command for the opening of switch T1, thus excluding the inhibiting branch and consequently allowing the switching exchange to detect the dialling digits necessary for the establishment of the connection requested by the subscriber.

It has been observed that the electronic padlock LT results to be better protected against noises if it is housed in metallic container electrically connected to one of the line wires; in the figure it has been assumed that the container be indicated by dashed line and electrically connected to one of the line wires.

Figure 2 shows a first embodiment of sensor SS and of the electronic switch T1, the connection modes of the electronic padlock to the telephone line are also illustrated.

The circuital arrangement results in fact connected to wires a and b via a bridge of diodes PD in parallel to which a overvoltage protecting element PS is connected. The bridge of diodes PD is designed to maintain unchanged the polarities present at the edges of the circuital arrangement even though the polarities applied to wires a and b are reversed in the switching exchange.

The output of the bridge of diodes PD is connected to the said threshold circuit consisting of unit Z1 and of resistance R1 of high value; the maximum abscription allowed by the bodies that manage the telephone installations must be however taken into account for dimensioning such a resistance R1 and if, for istance, such a resistance has a value of some $M\Omega$ it results to be crossed by a current having the value of some tens of $\mu$A. A current abscription of the now displayed entity is usually allowed by the aforesaid managing bodies.

As regards unit Z1, it must provide and intervention threshold so dimensioned as not to interfere with the normal operation of the telephone set, in particular, the Zener voltage must comply with condition $Vz = Vt + Vl + Vf$; wherein $Vt$ represents the voltage fall taking place on the telephone set, $Vl$ represents the voltage fall occuring on the line between the point where the device is inserted and the terminal, wherein $Vf$ represents the amplitude of the voice signal.

If the intervention threshold of unit Z1 results so dimensioned as set forth above, unit Z1 does not interfere with the normal operation of the telephone set.

When the receiver of unit TL results to be hooked (line open) unit Z1 results to be crossed by current and consequently the edges of R1 provide such a voltage as to determine the conductivity of a pair of transistors Q1 and Q2 via the respective resistances R2 and R3.

Transistor Q1 is adapted to act as an electronic switch that has been sketched in figure 1 by way of switch T1 and presents the gate electrode connected to the drain electrode of a further transistor Q3.

The gate electrode of transistors Q1 and Q2 results also to be connected to a respective Zener diode Z2 and Z3 being designed to protect these transistors against overvoltages.

The drain electrode of unit Q2 is connected, via resistance R4, to the supply voltage VDD generated by unit UA. The drain electrode of unit Q1 is instead connected, via resistance R5, to the other edge of the diode bridge PD; resistance R5 is designed to protect unit Q1 in case of over voltages, thus reducing the current.

As stated above, when restoring the receaver, the electric branch Z1, R1 results to be crossed by current and consequently the conduction of transistors Q1 and Q2 is detected.The said signal S is detected over the drain electrode of unit Q2 and, in the now displayed condition, signal S presents a low logic level. In presence of such a livel for a time interval not shorter than a predetermined entity, unit UL generates a reset signal R adapted to determine the conduction of transistor Q3 and consequently the inhibition of transistor Q1. Instead, transistor Q2 remains conductive.

Reminding that unit Q1 performs the activation and disactivation of the inhibiting electric branch it results that the opening of switch T1 (see figure 1) inhibits the current shift over such electric branch and consequently the switching exchange is able to detect the opening of the telephone line previously effected by way of the receiver restoration, thus detecting the disengagement criterium.

When the telephone line is successively engaged by the subscriber, the supply direct current generated by unit CT is interrupted through the telephone set TL and the current flow of branch Z1, R1 consequently results inhibited because of the threshold of Z1.

As a consequence transistor Q2 in inhibited so that signal S presents in this case a high logic level.

The logic unit UL detects this event and with a predetermined delay is disactivates signal R, thus causing the inhibition of Q3 and enablis- ing unit Q1 to be conductive when the electric branch Z1, R1 will re-. sult to be crossed by current further to a dialling operation.

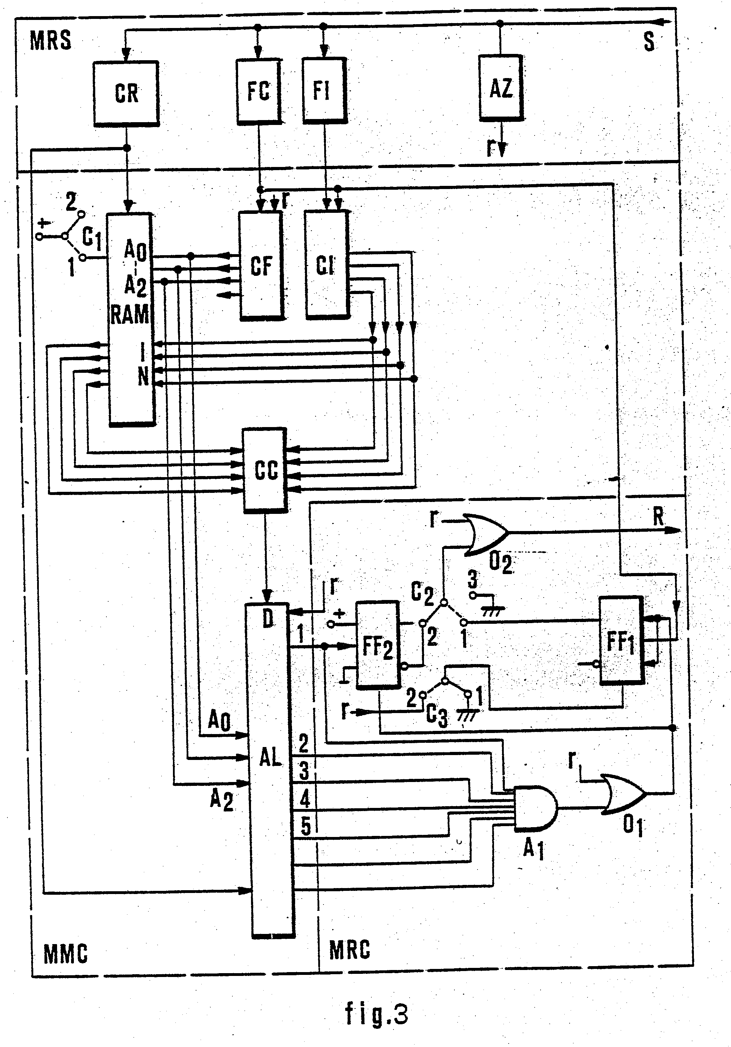

In fact, when the subscriber dials the first digit (at the first opening of the telephone line) the electric branch Z1, R1 will result to be crossed by current and transistor Q1 will be biased, the conductivity of this transistor causing the activation of said inhibiting e- lectric branch; from this instant of the telephone exchange will be not able to detect the openings of the telephone line performed by means of the dialling device of the terminal and consequently exchange CT will be not able to detect the dialling digits. Such digits are instead detect by the logic unit UL (signal S) by way of transistor Q2 which is conductive when the telephone line is open, whereas it results inhibited when the telephone line is closed. Signal S is applied to the input of a logic unit UL a first preferred embodiment of which is described with reference to figure 3.

Unit UL provides the presence of signal rebuilding means MRS whose input is applied to said signal S. In particular, signal S is applied to the input of a resetting circuit AZ which provides the presence of on inverter and of a time constant circuit adapted to activate its own input r with a delay sensibly longer than the period of the ring signal in order to avoid that to logic unit be activated by the said signal. Signal S is also applied to the input of an impulse shaper FI and of a digit shaper FC and of a delay circuit CR. Unit FI is designed to activate its own output according to the rythm defined by the decadic dialling impulses, thus rendering available at the output the rebuilt impulses, while unit FC is adapted to activate its own output for the endurance of a dialling digit.

The outputs of the signal rebuilding means are applied to the input of storage means of the MMC combination, which provide the presence of an impulse counter CI connected to the output of the impulse shaper FI, of a digit counter CF connected to the output of the digit shaper FC, and of a random access memory RAM providing, for istance, a storing capacity of 16.4 bits, thus allowing the storage up to a maximum of 16 combination digits.

The address input A0,...,A2 of unit RAM receives the outputs of the digits counter CF, its data input IN receives the outputs of the impulse counter CI and its enabling input receives the output of the delay circuit; these latest outputs are also applied to the input of a comparison circuit CC, the other input of which is adapted to receive the outputs of unit RAM.

Means MMC further comprise an addressable register AL whose data input D receives the output of the comparison circuit CC and whose enabling input receives the output of the delay circuit CR.

An input of unit RAM results to be connected to a commutator C1 adapted to allow the application of a prearranging signal to the input of unit RAM (position 1 of the commutator). When unit C1 is in this position, unit RAM is so arranged as to perform a writing operation that is carried out in order to store the combination of the padlock inside logic unit UL.

In fact, after the connection of the electronic padlock with the telephone line, the subscriber sets commutator C1 in the 1 position and performs the dialling of the first digit of the chosen combination.

As the dialling of the first digit is in progress, counter CF addresses the first line of unit RAM where, in presence of the signal supplied by unit CR, there is written a binary configuration relating to the number of the decadic pulses counted by the impulse counter CI; after selection of the first digit, unit CI is reset, whereas unit CF is increased by one step and addresses the second line of unit RAM where there will be written a second binary configuration relating to the second digit dialled by the subscriber. When the subscriber has comple ted the writing of all digits of the preferred combination, he sets commutator C1 in position 2 thus enabling unit RAM to perform reading operations.

When the combination storage is finished, the subscriber recovers the receiver thus causing the emission of a reset signal r by unit AZ that resets these counters and enables the logic unit to perform an identification operation during a next engagement of the telephone line.

When the subscriber will engage the telephone line there will occur an activation of the said inhibiting electric branch, as previously indicated, that will be able to be disactivated by the logic unit UL according to the now specified modes:

- the first mode provides the disactivation of the inhibiting electric branch only when the subscriber dials a digit combination corresponding to the one comprised in unit RAM;

- the second mode provides the activation of the inhibiting branch when the subscriber, as a first digit, dials a digit equal to that provided for the access to the trunk dialling;

- the third mode provides the disactivation of the telephone padlock upon command of the subscriber responsible for the telephone set, as well as the subsequent activation upon command of the same subscriber;

- the fourth operative mode provides the permanent activation (the disactivation is performed by activating a commutator), of the inhibiting branch, thereby obtaining a telephone line which is only enabled to receive calls.

With reference to the first operative mode, when the subscriber dials the first digit counter CF addresses the first line of unit RAM and consequently an input of the comparison circuit CC provides, when unit CR energizes its own output, the binary configuration relating to the first digit of the selection.

Such a configuration is compared to the digit dialled by the subscriber which results available at the output of unit CI. If the comparison has positive result, unit CC generates an impulse that is stored, when the output of unit CR is active, in the addressable register AL which energizes its own output 1. The following digits dialled by the subscriber, if cousing comparisons with positive result by unit CC1, deter-

0126496

mine further activations of the outputs of unit AL.

The output of unit AL are connected to said digit identifying means MRC which provide a logic product unit A1 presenting as many inputs as the outputs of unit AL. If all outputs of unit AL result to be activate, there is detected the activation of the output of unit A1 in cascade therewith is connected a logic sum unit 01 whose input also receives the said reset signal r.

The output of unit 01 is applied to the input of a first bistable circuit FF1, whose timing input is connected to the output of the digit shaper FC.

After that the subscriber has finished the selection of all the digits provided in the combination, if unit A1 energizes its own output, the activation of the input of unit FF1 is detected; when this latter unit receives at the timing input the signal supplied by FC, performs a switching thus determining the energization of the first input of a logic sum unit 02 via commutator C2. The second input of unit 02 receives the said reset signal r.

The reset input of unit FF1 is connected to the output of a further commutator C3 whose input 1 is connected to the ground and whose input 2 is applied to the said reset signal r.

When the subscriber wants to enable the use of the telephone set according to the said first operation mode, he sets commutator C3 in position 2 and commutator C2 in position 1. Thus, the energization of the output of unit FF1 determines the activation of unit 02 and consequently the conduction of the said transistor Q3 which inhibits Q1, thus turning off the inhibiting electric branch. The output of unit Q2 results to be however energized by said signal r further to a disengagement operation of the telephone line.

On recovering the receiver, unit AZ emits the said signal r which, via commutator C3, causes the switching of unit FF1 so that, if commutator C3 is kept in this position, the inhibiting electric branch will be newly activated at the next engagement of the telephone line.

Instead, if commutator C3 is set in position 1, the logic unit UL will operate according to the said third operation mode since unit FF1, being never reset, switches everytime the condition of the timing inputs is changed; as a consequence unit FF1 determines the activation or the disactivation of the inhibiting electric branch whenever the subscriber dials the combination stored in unit RAM. Such an operation mode allows therefore the disactivation of the electronic padlock as long as the telephone set is, for istance, at the operator's disposal, so that the padlock results to be superfluous. The operator can disactivate the telephone padlock thus avoiding the combination dialling before the performance of any call. The subsequent activation of the padlock will be performed by the operator by newly dialling the said combination.

If commutator C2 is set in position 2, the logic unit UL is enabled to operate according to what provided by the said second operative mode. In fact, the input 2 of commutator C2 results to be connected to the output of a further bistable circuit FF2, whose data input results to be applied to a fixed polarity and whose timing input results to be connected to the first output of unit AL.

If the comparison circuit CC displays that the digit provided for the access to the trunk dialling network has been dialled as first digit, it generate an impulse which causes the activation of output 1 of unit AL and consequently the switching of unit FF2. Such an event determines the insertion of the inhibiting electric branch, and such a branch can be excluded by the subscriber if he dials the foreseen combination; in fact, if after having dialled digit 0 the combination is dialled, there is detected the activation of the outputs of units A1 and 01, consequently the switching of unit FF2 is detected, this unit causing the exclusion of the inhibiting electric branch via unit 02.

By setting commutator C2 in position 3, the padlock operates according said fourth operative mode, where the insertion of the inhibiting electric branch is systematically performed by unit AZ when the subscriber engages the line; such a branch cannot be absolutely excluded unless acting on such a commutator in order to operate according to one of the aforesaid operative modes. The fourth operative mode allows the person responsible for the terminal to enable the line to only receive as long as the terminal is not engaged by him.

The simplest embodiment of the solution provides a logic unit UL only obtained via the resetting unit AZ thus obtaining a device adapted to only operate according to the said fourth operative mode.

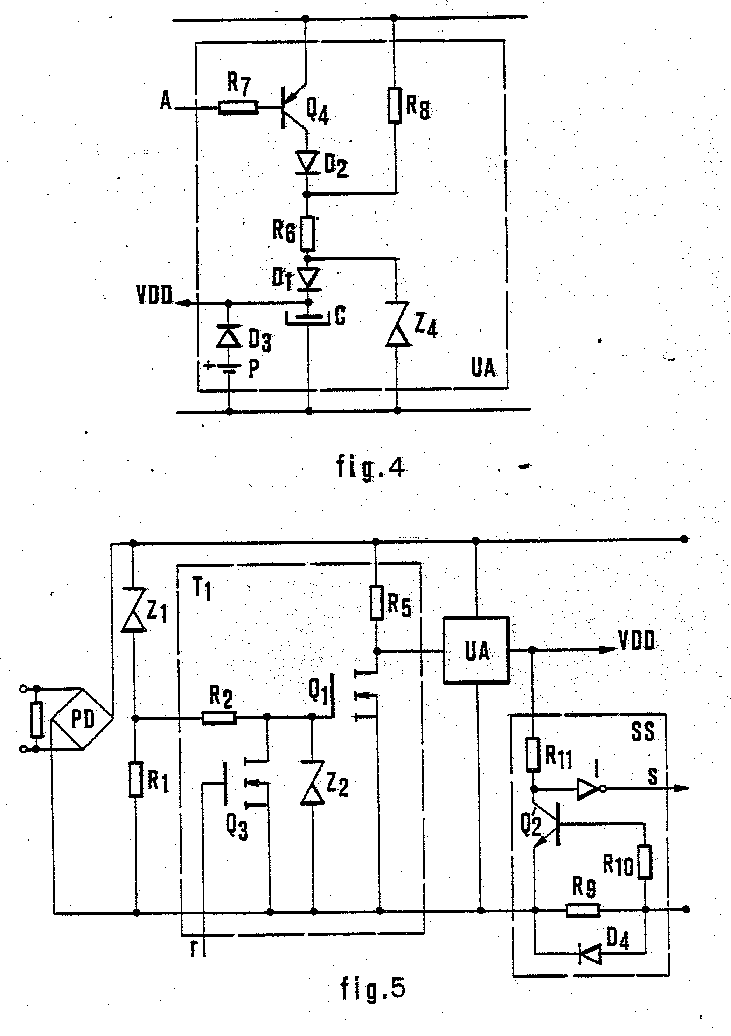

Figure 4 details the supply unit UA of figure 1 which mainly comprises a capacitor C adapted to store the energy supplied by the switching exchange via the telephone line. Capacitor C may load via a first electric branch consisting of an electronic switch implemented via a transistor Q4, which is provided in series with a resistance R6.

Transistor Q4 is made conductive by the said transistor Q1 (wire A) via a resistance R7. Unit C therefore receiver energy via the said electric branch in the instants when switch T1 of figure 1 results to be closed.

A second electric branch formed by a resistance R8 of high value ensures the permanent charge of C.

The output of unit UA renders available the supply voltage VDD which results to be reduced via a Zener diode Z4. Unit C is connected in series with a first and a second diode D1 and D2 being designed to avoid the unload of C1 when the electronic padlock is not active.

In order to ensure a correct supply of the logic unit UL in any circum-'stance a cell P is connected in parallel with unit C, whereas a further diode D3 is connected in series with said cell P.

Figure 5 shows an embodiment of sensor SS to be adapted alternatively in that illustrated in figure 2. Particularly in figure 2 a voltage sensor implemented via a VMOS transistor. Q2 is utilized as sensitive element of the line condition, the said signal S being available on the drain electrode of this element.

Instead, in figure 5 a current sensor implemented via a resistance R9 and a transistor Q2' is utilized as sensitive element of the line condition.

A diode D4 is connected in parallel with resistance R9, the said diode being designed to establish a path for the current thus avoiding that the voltage at the edges of R9 exceed the threshold voltage of the dio̲ de itself (0,7 V.). The base of transistor Q2 is connected to a resistance R10 being designed to reduce its basic current.

When the subscriber engages the telephone line a current shift occurs over resistance R9 that biases transistor Q2' rendering it conductive and consequently collector of Q2', which receives voltage VDD via a resistance R11, provides a low logic level when the telephone line results to be engaged. In order to obtain a polarity inversion of the signal available over the collector of Q2' provides there is an inverting circuit I whose output provides the said signal S having polarities corresponding to those illustrated in figure 2.

If a current sensor is utilized as element sensitive of the line condi̲ tion, the electronic padlock assumes the shape of a quadripole.

It derives that sensor SS of figure 5 presents in comparison with sensor SS of figure 2 disadvantage of installation, since a bipole may be installed more easily than a quadripole. Moreover, the circuit of figure 5 introduces a voltage fall of about 2 Volts due to diode D2 and to the diodes of bridge PD.

It is to be noted, however, that by this application the current sensor as for as sensitivity and protection against temperature variations is concerned.

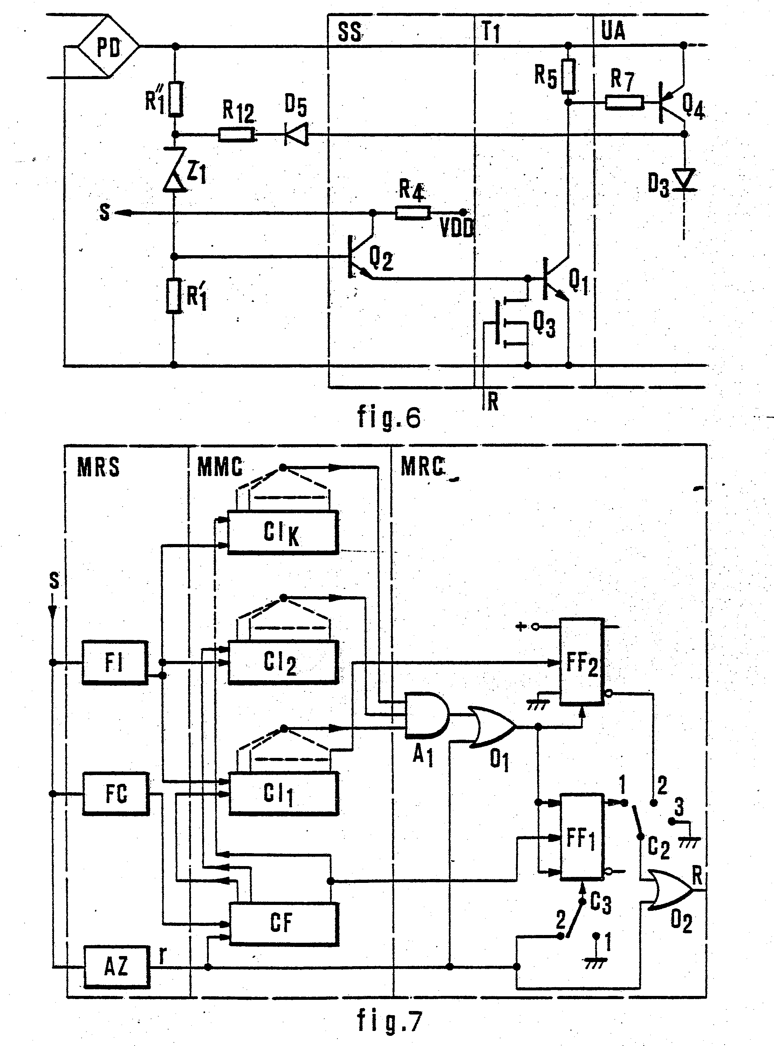

Figure 6 illustrates instead a second embodiment of said threshold circuit and of said voltage sensor SS. As regards the threshold circuit it may be noted that said resistance R1, connected in series with the Zener diode Z1, has been divided into resistance R1' and resistance R1", where the value of the former is a fraction of the value of the latter. In fact, it has been observed that in order to render the circuit less sensitive to temperature variations, the value of the biasing resistance of transistor Q1 should be reduced.

A resistance R1' of low value and a resistance R1" of high value allows to achieve the advantage that the system be better protected against

- 15 -

0126496

temperature variations.

It is however to be noted that the presence of resistance R1" in series with Z1 involves an increase of the threshold value in which transistor Q1 becomes conductive. However this fact causes no drawbacks as, when Q1 is conductive, it renders Q4 conductive and consequently also a diode D5 becomes conductive.

This latter unit provides in series a resistance R12 of low value and is connected between the collector of unit Q4 and the reophore of R1" which results connected to unit Z1 and consequently the conduction of D5, together with the conduction of Q4 involves the short circuit of R1". As a consequence and starting from this moment a decrease of this threshold value is detected, and the said value returns to be corresponding to the Zener voltage of unit Z1.

According to the now considered embodiment, transistor Q2 of said voltage sensor provides the base connected to the anode of unit Z1 and the emitter connected to the base of Q1 which is further connected to the drain electrode of Q3. Signal S results to be available on collector of Q2 which receives the said voltage VDD via resistance R4.

Figure 7 illustrates a second embodiment of the logic unit UL of figure 1 which differs from that shown in figure 3 · substantially for what regards the combination storing means MMC. These latter provide the presence of a digit counter CF and of a number $\underline{k}$ of impulse counters CI equal to the number of the digits forming the combination.

The digit counter CF steps forward according to the rythm of the impulses available at the output of the digit shaper FC, unit CF and units CI are of the type having decoded outputs and each output of unit CF enables a respective unit CI to count.

Thus, when the subscriber dial the first digit unit CI1 results to be enabled and steps forwards by a number of steps equal to the number of impulses present in the first digit. At the selection of the second digit, unit CF enables unit CI2 that will also step forward by a number of steps equal to the number of impulses comprised in the second digit and so on.

0126496

The establishment of the combination that means MMC shell recognize
is performed by extracting the signals available at the outputs chosen
by units CI and sending them to the input of the logic product unit A1.
That is to say, if the subscriber choses digit 4 as first digit, he
connects the first input of unit A1 to the fourth output of unit CI1;
if he choses digit 7 as second digit, he connects the second input of
unit A1 to the seventh output of unit CI2 and so on.

As regards unit FF2 of the combination identifying means MRC it is to
be noted that it provides the input connected to the output of unit CI1
that is activated when the subscriber dials the digit of access to the
trunk dialling network; the performances described with reference to
the said second operative mode are thus achieved.

According to a further embodiment, the logic unit UL consists of a microcomputer whose input receives the said signal S and whose output
renders available signal R. The adoption of such unit allows to confer
to the electronic padlock a further performance, i.e. to allow the use
of the telephone line only when the called subscriber results to be
comprised among the users authorized to utilize the line in question.
This necessity is particularly felt among users such as trading operators having more operative seats and whose telephone sets might be thus
enabled to effect direct calls only towards the remaining commercial
seats.

- 17 -

0126496

CLAIMS

1) Electronic padlock for subscriber's telephone line, characterized in that it comprises a circuital arrangement providing the presence in combination of the following characteristic elements:
- a sensor (SS), connected to the telephone line, adapted to render available a first signal (S) whose level indicates the condition of the line itself;
- a logic unit (UL) adapted to store a predetermined combination of di gits, further adapted to rebuild the digits dialled by the subscriber on the ground of the exam of the level of the first signal (S), and also arranged to generate a second signal (R) when it detects the pre sence of a predetermined relationship between the combination of di gits stored therein and the digits dialled by subscriber;
- a threshold circuit (Z1, R1) connected in parallel with the telephone terminal;
- an inhibiting electric branch (T1), adapted to be connected in paral lel with the telephone terminal (TL) upon command by the said logic unit (UL) and of the said threshold circuit (Z1, R1), the branch being of such an impedance as to result crossend during the openings of the line, by a current of predetermined entity;
- a supply unit (UA) adapted to extract energy from the telephone line and further adapted to render available a direct voltage of supply (VDD) of the said logic unit (UL).

2) A circuital arrangement as claimed in claim 1, characterized in that the said threshold circuit consists of a first Zener diode (Z1) whose anode results to be connected to a first resistance (R1).

3) A circuital arrangement as claimed in claim 1, characterized in that the said inhibiting electric branch (T1) provides the presence in combi nation of the following characteristic elements:
- a first transistor (Q1) whose gate electrode results to be connected to the anode of the first Zener diode (Z1) via a second resistance (R2), whose source electrode results to be connected to a wire of the line, and whose drain electrode results to be connected to the other wire of the line via a third resistance (R5);

- a second transistor (Q3) whose drain electrode results to be connected to the gate electrode of the first transistor (Q1), whose source electrode is connected to the source electrode of the first transistor (Q1) and whose gate electrode receives the said second signal (R);

- a second Zener diode (Z2) connected between the base and the emitter of the first transistor (Q1).


4) A circuital arrangement as claimed in claim 1, characterized in that the said sensor (SS) consists of a voltage sensor and provides the presence in combination of the following characteristic elements:

- a third transistor (Q2) whose gate electrode is connected to the anode of the first Zener diode (Z1) via a fourth resistance (R3), whose source electrode is connected to a wire of the line and whose drain electrode receives the voltage (VDD) supplied by the said supply unit (UA) via a fifth resistance (R4);

- a third Zener diode (Z3) connected between the base and the emitter of the third transistor (Q2).


5) A circuital arrangement as claimed in claim 1, characterized in that the said supply unit (UA) provides the presence in combination of the following characteristic elements:

- a capacitor (C) whose primary plate is connected to the wire of the line and whose secondary plate is connected to the cathode of a first diode (D1); -

- a fourth transistor (Q4) whose collector is connected to the anode of the first diode (M) via a sixth resistance (R6) and a second diode (D2), whose emitter is connected to the other wire of the line and whose base is connected to the collector of the first transistor via a seventh resistance (R7);

- on eighth resistance (R8) connected between the cathode of the second diode (D2) and emitter of the fourth transistor (Q4);

- a fourth Zener diode (Z4) connected between the anode of the first diode (D1) and the first plate of said capacitor (C);

- an electric branch, comprising a cell (P) and a third diode placed in series with one another, connected in parallel with the capacitor (C).

6) A circuital arrangement as claimed in claim 1 characterized in that the said sensor (SS) consists of a current sensor and provides the presence in combination of the following characteristic elements:

- a nineth resistance (R9) connected in series with one of the wires of the telephone line;

- a fifth transistor (Q2') whose base is connected to the first reophore of the nineth resistance (R9) via a tenth resistance (R10) the emitter is connected to the second reophore of the nineth resistance (R9) and the collector connected to the voltage (VDD) furnished by the supply unit (UA) via an eleventh resistance (R11);

- an inverter (I) connected to the collector of the fifth transistor (Q2');

- a fourth diode (D4) connected in parallel with the eighth resistance (R8).

7) A Circuital arrangement as claimed in claims 2, 4 and 5, characterized in that in the said threshold circuit the first resistance (R1) is in the form of a twelfth and of a thirteenth resistance (R1' and R1") connected to a respective electrode of the first Zener diode (Z1), in that the collector of the fourth transistor (Q4) is connected to the cathode of the first Zener diode (Z1) via an electric branch comprising, in series with one another, a fifth diode (D5) and a fourteenth resistance (R12), in that in the said voltage sensor (SS) the second transistor (Q2) provides the base connected to the anode of the first Zener diode (Z1), the emitter connected to the base of the first transistor·
(Q1) and the collector connected to the supply voltage (VDD) via the
said fifth resistance (R4).

8) A circuital arrangement as claimed in claim 1 characterized in that
the said logic unit (UL) provides the presence in combination of the fol_
lowing characteristic elements:
- signal regeneration means (MRS) whose input is adapted to receive the
  said first signal (S);
- combination storing means (MMC) connected to the output of the signal
  regeneration means (MRS);
- digit identification means (MRC) connected to the output of the digit
  storing means (MMC).

9) A circuital arrangement as claimed in claim 8 characterized in that
the said signal regeneration means (MRS) provide the presence in combination of the following characteristic elements:
- a reset unit (AZ) adapted to activate its own output with a delay,
  longer than the period of the ring signal, with respect to the activation of the said first signal (S);
- an impulse shaper (FI) adapted to activate its own output in response
  to each activation of the said first signal (S);
- a digit shaper (FC) adapted to activate its own output in response to
  each sequence of activations of the said first signal (S);
- a delay circuit (CR) adapted to activate its own output in response
  to each sequence of activation of the said first signal (S), at an
  instant preceeding the activation of the output of the digit shaper
  (FC).

10) A circuital arrangement as claimed in claim 8 characterized in that
the said combination storing means (MMC) provide the presence in combination of the following characteristic elements:

- an impulse counter (CI) connected to the output of said impulse shaper (FI);

- a digit counter (CF) connected to the output of the digit shaper (FC);

- a random access memory (RAM) whose address input is connected to the output of the digit counter (CF) and whose data input is connected to the output of the impulse counter (CI);

- a comparison circuit (CC) whose first input is connected to the output of the random access memory (RAM) and whose second input is connected to the output of the impulse counter (CI);

- an addressable register (AL) whose address input is connected to the output of the digit counter (CF) and whose data input is connected to the output of the comparison circuit (CC);

- a first commutator (C1) adapted to allow the application of a polarity to an input of the random access memory (RAM).

11) A circuital arrangement as claimed in claim 7, characterized in that the said combination identification means (MRC) provide the presence in combination of the following characteristic elements:

- a first logic product unit (A1) whose inputs are connected to the outputs of the addressable register (AL);

- a first logic sum unit (O1) whose input is adapted to receive the output of the first logic product unit (A1) and the output (r) of the reset unit (AZ);

- a first bistable circuit (FF1) whose enabling inputs are connected to the output of the first logic sum unit (O1) and whose timing input is connected to the output of the digit shaper (FC);

- a second logic sum unit (O2) whose first input is connected to the output of the first bistable circuit (FF1) and whose second input is connected to the output (r) of the reset unit (AZ);

- a second bistable circuit (FF2) whose data input is applied to a fixed polarity and whose timing input is connected to the first output of the addressable register (AL);

0126496

- a second commutator (C2) adapted to connect the output of the first bistable circuit (FF1) or to the reversed output of the second bistable circuit (FF2) or to the ground potential to the first input of the said second logic sum unit (O2);

- a third commutator (C3) adapted to connect the reset input of the first bistable circuit (FF1) to the ground potential or to the output (r) of the said reset unit (AZ).

12) A circuital arrangement as claimed in claim 8, characterized in that the said combination storing means (MMC) provide the presence in combination of the following characteristic elements:

- a digit counter (CF) whose input is connected to the output if the digit shaper (FC);

- k impulse counters (CI1,...,CIk), k being the number of digits provided in the combination, whose enabling inputs are connected to a respective output of the digit counter (CF) and whose counting inputs are connected to the output of the impulse shaper (FI).

13) A circuital arrangement as claimed in claim 1, characterized in that the said logic unit consists of a microcomputer.

14) A circuital arrangement as claimed in claim 1 characterized in that the said logic unit (UL) consists of the said reset unit (AZ).

15) A circuital arrangement as claimed in claim 1, characterized in that it results to be housed inside a metallic structure electrically connected to one of the line wires.

16) A circuital arrangement as claimed in claim 1, characterized in that it results to be connected to the telephone line via a bridge of diodes (PD) which is connected in parallel with a device designed to protect against overvoltages (PS).

fig.1

fig.2

0126496

2/4

fig.3

3/4

0126496

fig.4

fig.5

fig.6

fig.7